# EUROPEAN PATENT APPLICATION

(11) **EP 3 998 591 A1**
(43) Date of publication of application: **18.05.2022**
(21) Application number: 20837790.3
(22) Date of filing: 05.06.2020
(51) Int. Cl.: G08G 1/00, G08G 1/09, G06Q 40/00, G06Q 50/30

(54) **ACCIDENT RISK DIAGNOSIS METHOD, ACCIDENT RISK DIAGNOSIS DEVICE, AND ACCIDENT RISK DIAGNOSIS SYSTEM**

(30) Priority: 08.07.2019 JP 2019127147
(71) Applicant: Hitachi High-Tech Corporation, Minato-ku Tokyo 105-6409 (JP)
(72) Inventor: NAKAGUMA, Kyouichi, Tokyo 100-8280 (JP); SOBUE, Tsuneo, Tokyo 100-8280 (JP); KITAHARA, Michimasa, Tokyo 100-8280 (JP); HORIKOSHI, Nobuya, Tokyo 105-6409 (JP)
(74) Representative: MERH-IP Matias Erny Reichl Hoffmann Patentanwälte PartG mbB
(86) International application number: PCT/JP2020/022431
(87) International publication number: WO 2021/005933

(57) **Abstract**

A mechanism for accurately estimating an accident risk of a driver is realized. An accident risk diagnosis apparatus stores travel data that is data indicating a travel state of each of a plurality of vehicles for each date and time and information on past accidents of the plurality of vehicles, extracts the travel data for a predetermined period before an accident day and the travel data on the accident day from among the travel data, generates training data for each trip that is a period from activation to termination of a vehicle based on an extracted travel data, generates an accident risk diagnosis model that is a machine learning model for diagnosing an accident risk using the training data, inputs a feature in a trip of a vehicle to be diagnosed to the accident risk diagnosis model to diagnose the accident risk, and transmits a diagnosis result to an in-vehicle device mounted on the vehicle.

## Description

### Technical Field

The present invention relates to an accident risk diagnosis method, an accident risk diagnosis apparatus, and an accident risk diagnosis system

### Background Art

The present application claims priority based on Japanese Patent Application No. 2019-127147 filed on July 8, 2019, the entire disclosure of which is incorporated herein by reference.

PTL 1 describes a driving diagnosis apparatus capable of performing driving diagnosis in a complex manner for a plurality of driving operations. The driving diagnosis apparatus extracts a stop action index, a start action index, and a deceleration action index of a vehicle that has made a temporary stop at an intersection through which the vehicle has passed from among the indices stored in the storage unit, obtains a deviation value of the stop action characteristic using the extracted stop action index as a sample, obtains a deviation value of the start action characteristic using the start action index as a sample, obtains a deviation value of the deceleration action characteristic using the deceleration action index as a sample, and obtains a sum of the deviation values as a diagnosis score.

PTL 2 describes a vehicle driving support device that supports a driver's operation. The driving support device for a vehicle acquires short-time data indicating a current traveling state and a driving operation and medium-time data indicating a traveling state and a driving operation on that day, performs driving diagnosis by comparing a distribution of the short-time data and a distribution of the medium-time data, evaluates a driving diagnosis result according to two evaluation criteria, and gives an alarm or a driving improvement suggestion.

### Citation List

### Patent Literature

PTL 1: JP 2016-62281 A
PTL 2: JP 2013-30188 A

### Summary of Invention

### Technical Problem

Recently, provision of telematics insurance, which is automobile insurance utilizing telematics technology, has started. The telematics insurance is an automobile insurance realized by improvement of machine learning/AI technology such as deep learning and improvement of electronic control/communication technology mounted on a connected car in which an automobile is connected to the Internet.

The telematics insurance includes an actual mileage linked type insurance (pay as you drive (PAYD) type insurance) in which an insurance premium according to an actual mileage is paid, and a driving characteristic linked type insurance (pay how you drive (PHYD) type insurance) in which an insurance premium according to a driving situation such as fast traveling speed or rough cornering is paid. A high automobile insurance premium rate is applied to a person having a high possibility of causing an accident, and a low automobile insurance premium rate is applied to a person having a low possibility of causing an accident.

Meanwhile, when implementing telematics insurance, it is required to accurately estimate a potential (hereinafter, referred to as "accident risk") at which a driver will cause an accident on the basis of information collected from an in-vehicle device provided in a vehicle, a smartphone of the driver, or the like, with a common scale while considering various driving situations of the driver.

Here, in the technique described in PTL 1, data of speed and acceleration (stop/start/deceleration) at an intersection is used to diagnose the proper driving state of the driver from a deviation from the behavioral characteristics of another vehicle. However, since the place is limited to an intersection and the driving operation with limited time is compared, it is not possible to estimate whether the accident risk during normal traveling other than the intersection is high or low.

In addition, the technique described in PTL 2 compares the normal driving behavior of the host vehicle with the driving behavior on that day, and assists the driver by notifying that it is more dangerous than usual. However, the comparison between the normal driving behavior and the driving behavior on the day is only a relative evaluation of the own vehicle, and it is not possible to absolutely evaluate whether the accident risk of the own vehicle is high or low as compared with other vehicles.

The present invention has been made in view of such a background, and an object thereof is to provide a mechanism for accurately estimating an accident risk of a driver.

### Solution to Problem

One aspect of the present invention for achieving the above object is an accident risk diagnosis method executed by an information processing device, including: storing travel data that is data indicating a travel state for each date and time of each of a plurality of vehicles, and information about past accidents of the plurality of vehicles; extracting, from the travel data, the travel data for a predetermined period before an accident day and the travel data on the accident day, and generating training data for each trip, which is a period from activation to termination of the vehicle, based on an extracted travel data; generating an accident risk diagnosis model which is a machine learning model for diagnosing an accident risk using the training data; and diagnosing an accident risk of the vehicle by inputting a feature in the trip of the vehicle to be diagnosed of the accident risk to the accident risk diagnosis model.

In addition, the object disclosed in the present application and the method for solving the problem will be clarified by the description of embodiments for carrying out the invention and the drawings.

### Advantageous Effects of Invention

According to the present invention, it is possible to provide a mechanism for accurately estimating an accident risk of a driver.

### Brief Description of Drawings

[FIG. 1] FIG. 1 is a diagram illustrating a schematic configuration of an accident risk diagnosis system.
[FIG. 2] FIG. 2 is an example of an information processing device that implements a diagnosis apparatus and an in-vehicle device.
[FIG. 3] FIG. 3 is a diagram illustrating main functions of the diagnosis apparatus.
[FIG. 4] FIG. 4 is a diagram illustrating main functions of the in-vehicle device.
[FIG. 5] FIG. 5 is an example of a travel data table.
[FIG. 6] FIG. 6 is an example of an accident data table.
[FIG. 7] FIG. 7 is an example of a trip index table.
[FIG. 8] FIG. 8 is an example of a trip data table.
[FIG. 9] FIG. 9 is a diagram illustrating configurations of various parameters.
[FIG. 10] FIG. 10 is an example of a training data table.
[FIG. 11] FIG. 11 is an example of a test trip index table.
[FIG. 12] FIG. 12 is an example of a test trip data table.
[FIG. 13] FIG. 13 is an example of a test data table.
[FIG. 14] FIG. 14 is a flowchart for explaining accident risk diagnosis processing.
[FIG. 15] FIG. 15 is a flowchart for explaining trip data generation processing.
[FIG. 16] FIG. 16 is a flowchart for explaining accident information preparation processing.
[FIG. 17] FIG. 17 is a flowchart illustrating training data generation main processing.
[FIG. 18] FIG. 18 is a flowchart for explaining trip period (pre-accident) determination processing.
[FIG. 19] FIG. 19 is a flowchart for explaining trip period (accident day) determination processing.
[FIG. 20] FIG. 20 is a flowchart for explaining training data generation processing.
[FIG. 21] FIG. 21 is a flowchart illustrating accident risk diagnosis model generation processing.
[FIG. 22] FIG. 22 is a flowchart illustrating test trip data generation processing.
[FIG. 23] FIG. 23 is a flowchart illustrating test data generation processing.
[FIG. 24] FIG. 24 is a flowchart for explaining accident risk diagnosis processing.
[FIG.25] FIG. 25(a) is a diagram illustrating a state in which the in-vehicle device displays information based on an accident risk diagnosis result. FIG. 25(b) is a diagram illustrating a state in which a mobile information terminal displays information.
[FIG. 26] FIG. 26 is a diagram illustrating main functions of an in-vehicle device according to a second embodiment.
[FIG. 27] FIG. 27 is a diagram illustrating main functions of an in-vehicle device according to a third embodiment.
[FIG. 28] FIG. 28 is a diagram illustrating main functions of a diagnosis apparatus according to a third embodiment.
[FIG. 29] FIG. 29 is a sequence diagram illustrating processing performed in the accident risk diagnosis system of the third embodiment.

### Description of Embodiments

Hereinafter, embodiments of the invention will be described with reference to the accompanying drawings. In the following description, the same or similar components are denoted by the same reference numerals, and redundant description may be omitted. In addition, in the following description, in a case where it is necessary to distinguish and describe the same type of configuration, an identifier (numbers, alphabets, and the like) may be written in parentheses after a reference sign collectively representing the same type of configuration.

### [First embodiment]

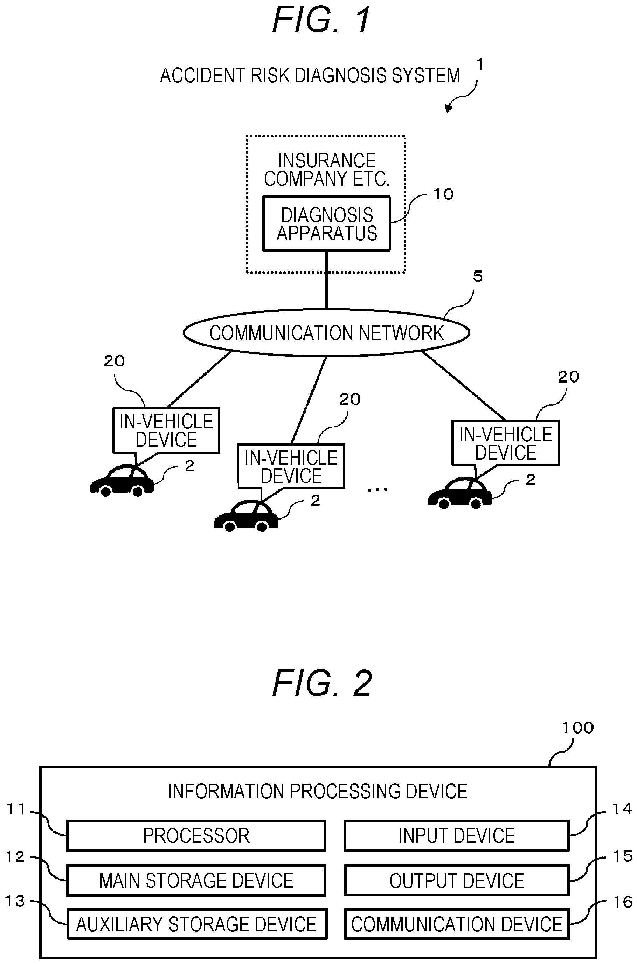

FIG. 1 illustrates a schematic configuration of an accident risk diagnosis system 1 described as an embodiment. As illustrated in the drawing, the accident risk diagnosis system 1 includes an accident risk diagnosis apparatus (hereinafter, it is referred to as a "diagnosis apparatus 10") and a plurality of in-vehicle devices 20.

The diagnosis apparatus 10 is, for example, an information processing device (computer) managed by an insurance company that handles telematics insurance such as pay as you drive (PAYD) type insurance or pay how you drive (PHYD) type insurance, a system management company that has received a commission from an insurance company, or the like.

The in-vehicle device 20 is an information processing device that is mounted on the vehicle 2 and sequentially provides information (hereinafter, it is referred to as "travel data") regarding an operation status (travel status) of the host vehicle to the diagnosis apparatus 10 via a communication network 5. Examples of the in-vehicle device 20 include an electronic control unit (ECU), a telematic control unit (TCU), an in-vehicle infotainment system (IVI), a smartphone, a feature phone, a tablet terminal, a head mounted display, an audio input device, a braille input device, a vibration detection device, and the like. The vehicle 2 is, for example, a connected car (a vehicle having functions of information and communication technology (ICT) terminal).

The diagnosis apparatus 10 and the in-vehicle device 20 are communicably connected to each other via the communication network 5. The communication network 5 includes, for example, wireless or wired communication equipment such as mobile communication (LTE, 3G, 4G, 5G, etc.), a wireless LAN, WiFi (registered trademark), WiMax (registered trademark), the Internet, a local area network (LAN), a wide area network (WAN), or a dedicated line. Communication via the communication network 5 is performed according to a protocol conforming to, for example, Ethernet (registered trademark), TCP/IP, a controller area network (CAN), Bluetooth (registered trademark), near field communication (NFC), universal serial bus (USB), RS-232C, or the like.

The diagnosis apparatus 10 generates a machine learning model (hereinafter, it is referred to as an "accident risk diagnosis model") for diagnosing an accident risk of a diagnosis target person such as a driver (an insurant) of the vehicle 2 on the basis of travel data provided from the in-vehicle device 20 mounted on each of the plurality of vehicles 2 and information regarding an accident of each of the plurality of vehicles 2 (hereinafter, referred to as "accident data"), and diagnoses the accident risk of the diagnosis target person using the generated accident risk diagnosis model. Note that the accident data is sequentially provided from, for example, a predetermined information source (an information processing system connected via the communication network 5).

As described above, the diagnosis apparatus 10 generates the accident risk diagnosis model based on the travel data collected from the plurality of vehicles 2, and diagnoses the accident risk of the driver by the generated accident risk diagnosis model. Therefore, the accident risk is not limited to the accident risk in a specific place, and it is possible to accurately estimate the accident risk on a common scale while considering various driving situations of the driver.

FIG. 2 is a block diagram illustrating an example of an information processing device that implements the diagnosis apparatus 10 and the in-vehicle device 20. As illustrated in the drawing, the illustrated information processing device 100 includes a processor 11, a main storage device 12, an auxiliary storage device 13, an input device 14, an output device 15, and a communication device 16. Note that, for example, all or a part of the information processing device 100 may be realized using a virtual information processing resource such as a cloud server provided by a cloud system.

The processor 11 is configured using, for example, a central processing unit (CPU), a micro processing unit (MPU), a graphics processing unit (GPU), a field programmable gate array (FPGA), an application specific integrated circuit (ASIC), an artificial intelligence (AI) chip, or the like.

The main storage device 12 is a device that stores programs and data, and is, for example, a read only memory (ROM), a random access memory (RAM), a non-volatile memory (non-volatile RAM (NVRAM)), or the like.

The auxiliary storage device 13 is, for example, a hard disk drive, a solid state drive (SSD), an optical storage device (Compact Disc (CD), Digital Versatile Disc (DVD), and the like), a storage system, an IC card, a reading/writing device of a recording medium such as an SD card or an optical recording medium, a storage region of a cloud server, or the like. The auxiliary storage device 13 can read programs and data via a reading device of a recording medium or the communication device 16. Programs and data stored (memorized) in the auxiliary storage device 13 are read into the main storage device 12 as needed.

The input device 14 is an interface that receives input from the outside, and is, for example, a keyboard, a mouse, a touch panel, a card reader, a voice input device, a smartphone, a tablet, a head mounted display, various control devices (ECU (Electronic Control Unit), TCU (Telematic Control Unit), IVI system (In-Vehicle Infotainment System), and the like), a braille input device, a vibration detection device, or the like.

The output device 15 is an interface that outputs various types of information such as a processing progress and a processing result. The output device 15 is, for example, a display device (liquid crystal monitor, liquid crystal display (LCD), graphic card, and the like) that visualizes the various types of information, a device (voice output device (speaker or the like)) that converts the various types of information into audio, or a device (printing device or the like) that converts the various types of information into characters. Note that, for example, the information processing device 100 may be configured to input and output information to and from another device via the communication device 16.

The communication device 16 is a device that realizes communication with other devices. The communication device 16 is a wired or wireless communication interface that realizes communication with other devices via the communication network 5, and is, for example, a network interface card (NIC), various wireless communication modules, a USB module, a serial communication module, or the like.

For example, an operating system, a device driver, a file system, a database management system (DBMS), and the like may be introduced into the information processing device 100.

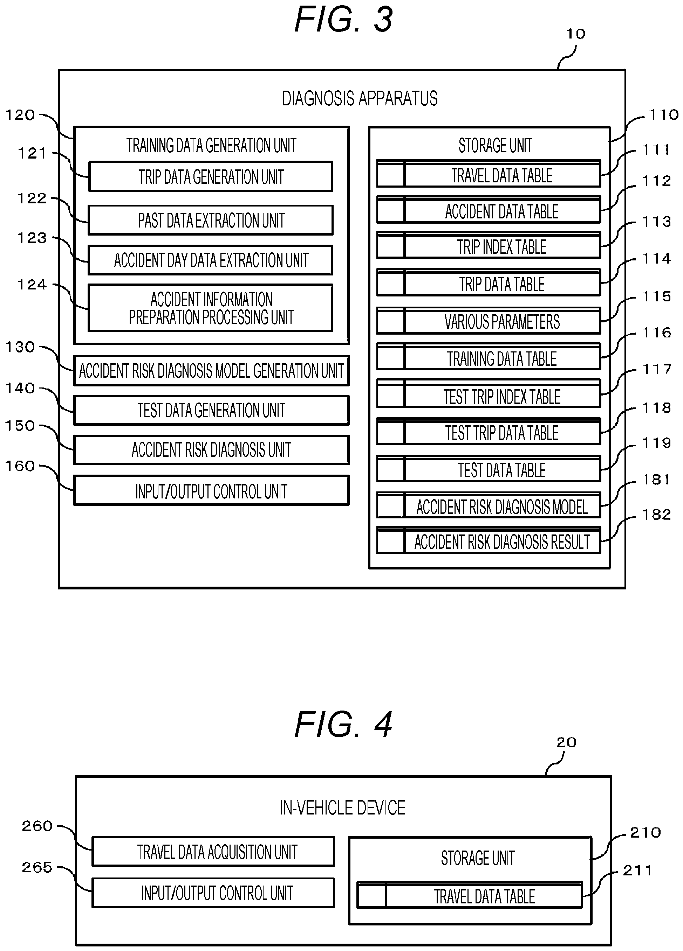

FIG. 3 illustrates main functions of the diagnosis apparatus 10. As illustrated in the drawing, the diagnosis apparatus 10 includes functions of a storage unit 110, a training data generation unit 120, an accident risk diagnosis model generation unit 130, a test data generation unit 140, an accident risk diagnosis unit 150, and an input/output control unit 160. In addition, the training data generation unit 120 includes a trip data generation unit 121, a past data extraction unit 122, an accident day data extraction unit 123, and an accident information preparation processing unit 124. These functions are implemented by the processor 11 of the diagnosis apparatus 10 reading and executing a program stored in the main storage device 12 or by hardware (FPGA, ASIC, AI chip, etc.) included in the diagnosis apparatus 10.

Among the above functions, the storage unit 110 stores a travel data table 111, an accident data table 112, a trip index table 113, a trip data table 114, various parameters 115, a training data table 116, a test trip index table 117, a test trip data table 118, a test data table 119, an accident risk diagnosis model 181, and an accident risk diagnosis result 182. The storage unit 110 stores these pieces of information (data) as, for example, a table of a database provided by the DBMS or a file provided by the file system.

Among the information stored in the storage unit 110, travel data transmitted from the in-vehicle device 20 is managed in the travel data table 111. The accident data table 112 also manages the accident data described above.

Trip index data is managed in the trip index table 113. The trip index data is data generated for each trip, which is a period from the start of traveling to the stop of traveling, for each vehicle 2, and is data including information on the trip (information indicating the above period, information indicating the accident presence/absence of the vehicle 2 in the period, and the like).

The trip data table 114 manages trip data that is information generated on the basis of the travel data table 111 transmitted from the in-vehicle device 20. The trip data is data in which travel data is associated with an identifier (hereinafter, referred to as "trip ID") of a trip to which the travel data belongs.

The various parameters 115 include information (setting values) regarding various parameters (variables) used in processing to be described later.

In the training data table 116, training data (learning data, teacher data) used for machine learning of the accident risk diagnosis model 181 is managed.

In the test trip index table 117, test trip index data, which is data having a data structure similar to that of the trip index data described above, is managed. The test trip index data is used to generate test data to be described later.

In the test trip data table 118, test trip data that is data having a data structure similar to the above-described trip data is managed. The test trip data is used to generate test data to be described later.

In the test data table 119, test data that is data having a data structure similar to that of the training data described above is managed. The test data is data (feature) input to the accident risk diagnosis model 181 as a diagnosis target in the accident risk diagnosis.

The accident risk diagnosis model 181 is a machine learning model that diagnoses (estimates) an accident risk on the basis of test data.

The accident risk diagnosis result 182 includes information regarding a diagnosis result of the accident risk performed using the accident risk diagnosis model 181.

Among the above-described functions of the diagnosis apparatus 10, the trip data generation unit 121 generates the above-described trip data.

The past data extraction unit 122 extracts, from the trip data table 114, trip data (hereinafter, it is referred to as "past data") in a predetermined past period before the day on which the accident occurred.

The accident day data extraction unit 123 extracts trip data (hereinafter, the data will be referred to as "that day data") in the period of the accident day from the trip data table 114.

The accident information preparation processing unit 124 performs accident data preparation processing used for generating training data.

The accident risk diagnosis model generation unit 130 generates the accident risk diagnosis model 181.

The test data generation unit 140 generates the test trip data and the test data on the basis of the travel data to be diagnosed for the accident risk.

The accident risk diagnosis unit 150 diagnoses the accident risk by inputting test data to the accident risk diagnosis model 181, and generates the accident risk diagnosis result 182 which is information including the result.

The input/output control unit 160 receives the travel data from the in-vehicle device 20 and stores the received travel data in the travel data table 111. In addition, the input/output control unit 160 transmits the accident risk diagnosis result 182 to the in-vehicle device 20.

FIG. 4 illustrates main functions of the in-vehicle device 20. As illustrated in the drawing, the in-vehicle device 20 includes a storage unit 210, a travel data acquisition unit 260, and an input/output control unit 265. These functions are implemented by the processor 11 of the in-vehicle device 20 reading and executing a program stored in the main storage device 12 or by hardware (FPGA, ASIC, AI chip, etc.) included in the in-vehicle device 20.

The storage unit 210 stores a travel data table 211. The storage unit 210 stores, for example, the travel data table 211 as a table of a database provided by the DBMS or a file provided by the file system.

The travel data acquisition unit 260 acquires travel data from devices mounted on the vehicle 2, for example, a control device (ECU, TCU, IVI system, etc.), a physical device (battery, sensor, etc.), and a GUI device (display, touch panel, etc.), and registers the acquired travel data in the travel data table 211.

The input/output control unit 265 sequentially transmits the travel data acquired by the travel data acquisition unit 260 to the diagnosis apparatus 10. In addition, the input/output control unit 265 outputs information based on the accident risk diagnosis result 182 transmitted from the diagnosis apparatus 10 to the output device 15.

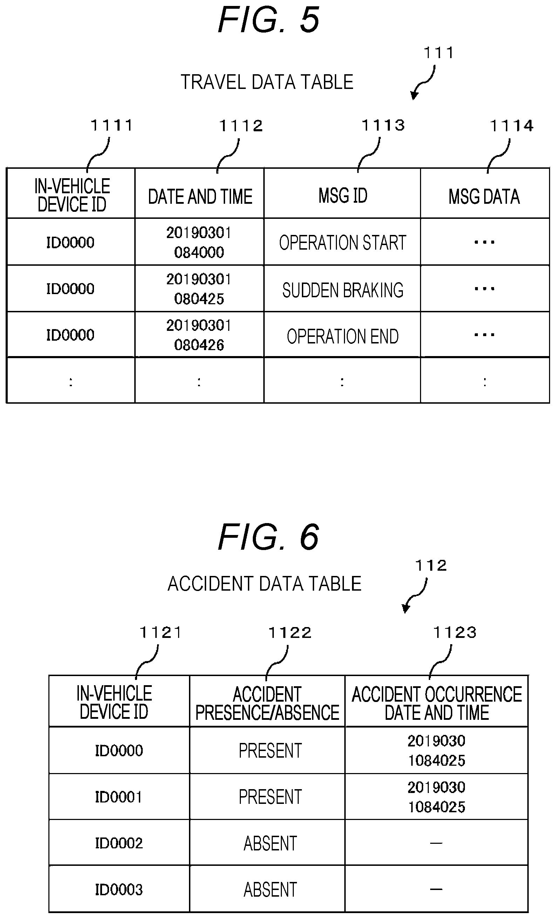

FIG. 5 illustrates an example of the travel data table 111. As illustrated in the drawing, the travel data table 111 includes a plurality of records having respective items of an in-vehicle device ID 1111, a date and time 1112, an MSG ID 1113, and MSG data 1114. One of the records corresponds to one piece of travel data.

An in-vehicle device ID that is an identifier of the in-vehicle device 20 is set as the in-vehicle device ID 1111.

A date and time when the travel data is generated in the vehicle 2 is set as the date and time 1112.

The MSG ID which is information indicating the behavior of the vehicle 2 is set as the MSG ID 1113. The MSG ID includes, for example, "operation start" indicating that an operation is started (activated), "sudden braking" indicating that a sudden braking operation is performed, "operation end" indicating that an operation is ended (activation is ended), and the like.

Additional information (hereinafter, the data is referred to as "MSG data") of the MSG ID is set in the MSG data 1114. For example, when "sudden braking" is set to the MSG ID 1113, values indicating accelerations in the three axial directions of the vehicle 2 measured when a sudden braking operation is performed are set to the MSG data 1114.

FIG. 6 illustrates an example of the accident data table 112. As illustrated in the drawing, the accident data table 112 includes a plurality of records having respective items of an in-vehicle device ID 1121, an accident presence/absence 1122, and an accident occurrence date and time 1123. One of the above records corresponds to one of the above accident data.

An in-vehicle device ID is set as the in-vehicle device ID 1121.

Information indicating whether the vehicle 2 on which the in-vehicle device 20 is mounted has caused an accident in the past is set as the accident presence/absence 1122. In the present example, in the accident presence/absence 1122, "present" is set if the vehicle 2 has caused an accident in the past, and "absent" is set if the vehicle 2 has not caused an accident in the past.

In the accident occurrence date and time 1123, when the vehicle 2 has caused an accident in the past, the occurrence date and time of the accident is set. For example, as the accident occurrence date and time 1123, text data indicating year, month, day, hour, minute, and second such as "20190301084025" or data indicating a difference from standard time based on Greenwich Mean Time (GMT) is set. In addition, if the vehicle 2 has not caused an accident in the past, information indicating invalidity such as "-" is set as the accident occurrence date and time 1123, for example.

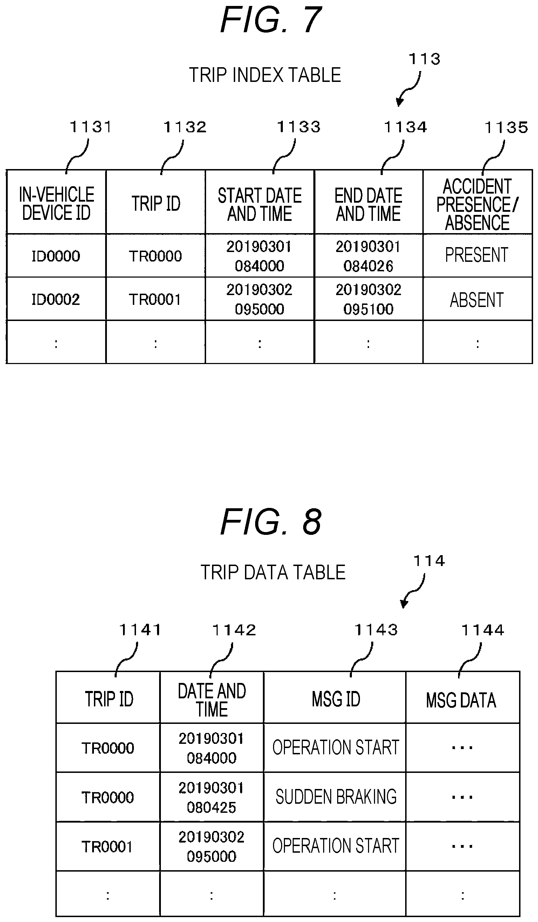

FIG. 7 illustrates an example of the trip index table 113. As illustrated in the drawing, the trip index table 113 includes a plurality of records including items of an in-vehicle device ID 1131, a trip ID 1132, a start date and time 1133, an end date and time 1134, and an accident presence/absence 1135. One of the above records corresponds to one piece of trip index data.

An in-vehicle device ID is set as the in-vehicle device ID 1131.

The trip ID described above is set as the trip ID 1132.

The start date and time of the trip is set as the start date and time 1133. The end date and time of the trip is set as the end date and time 1134. Note that, as the start date and time 1133 and the end date and time 1134, for example, text data indicating year, month, day, hour, minute, and second such as "20190301084000" and "20190301084026" or data indicating a difference from the standard time based on GMT is set.

Information indicating whether an accident has occurred in the trip of the vehicle 2 in which the in-vehicle device 20 is provided is set as the accident presence/absence 1135. In the present example, as the accident presence/absence 1135, "present" is set in a case where an accident has occurred, and "absent" is set in a case where no accident has occurred.

FIG. 8 illustrates a configuration of the trip data table 114. As illustrated in the drawing, the trip data table 114 includes a plurality of records having items of a trip ID 1141, a date and time 1142, an MSG ID 1143, and an MSG data 1144. One of the above records corresponds to one piece of trip data.

The trip ID described above is set as the trip ID 1141. Note that trip data having the same trip ID means trip data of trip index data having the same trip ID 1132.

The above-described MSG ID is set as the MSG ID 1143. The above-described MSG data is set as the MSG data 1144. The MSG ID set in the MSG ID 1143 is the MSG ID in the travel data, and the MSG data set in the MSG data 1144 is the MSG data in the travel data.

For example, trip data with the trip ID 1141 of "TR0000", the date and time 1142 of "20190301084000", and the MSG ID 1143 of "operation start" in the first row in FIG. 8 is included in a trip with the trip ID 1132 of "TR0000" in the first row of the trip index table 113 in FIG. 7. Since "Present" is set to the accident presence/absence 1135 of the trip (trip index data), the trip data is the first MSG data of the trip in which the accident has occurred.

The trip data with the trip ID 1141 of "TR0000", the date and time 1142 of "20190301080425", and the MSG ID 1143 of "sudden braking" in the second row in FIG. 8 is included in the trip with the trip ID 1132 of "TR0000" in the first row of the trip index table 113 in FIG. 7.

The trip data with the trip ID 1141 of "TR0001", the date and time 1142 of "20190302095000", and the MSG ID 1143 of "operation start" in the third row in FIG. 8 is included in the trip with the trip ID 1132 of "TR0001" in the second row of the trip index table 113 in FIG. 7. Since "Absent" is set to the accident presence/absence 1135 of the trip (trip index data), it is understood that the trip of the trip data belongs to a trip that has not caused an accident.

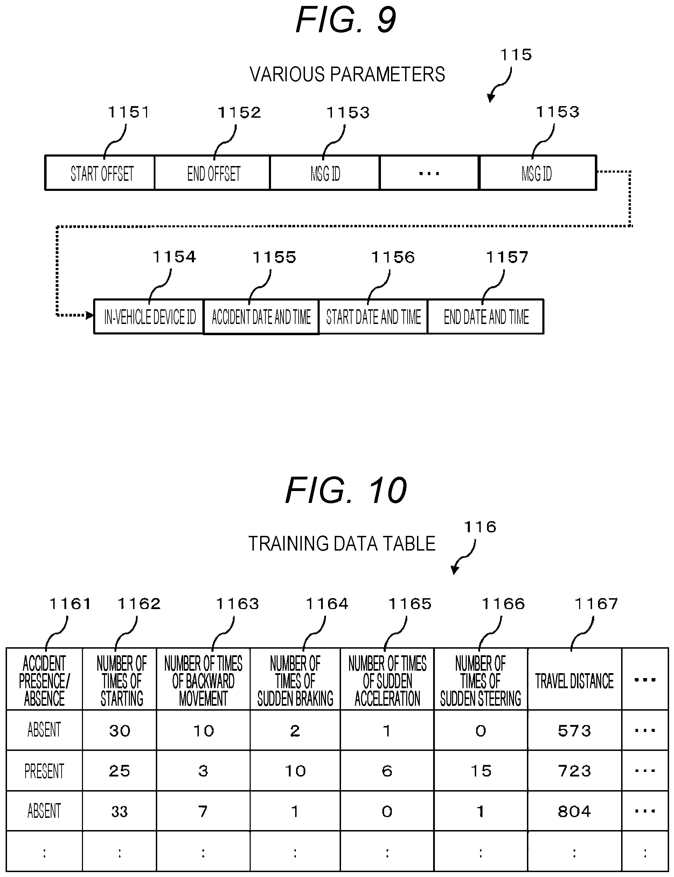

FIG. 9 illustrates an example of the various parameters 115. The various parameters 115 are parameters (variables) referred to in execution of various types of processing described later. As illustrated in the drawing, the various parameters 115 include information of parameters of a start offset 1151, an end offset 1152, one or more MSG IDs 1153 (MSG ID list), an in-vehicle device ID 1154, an accident date and time 1155, a start date and time 1156, and an end date and time 1157.

The difference (hereinafter, it is referred to as a "start offset") between the start dates of the past data is set as the start offset 1151. The difference (hereinafter, it is referred to as an "end offset") between the end dates of the past data is set as the end offset 1152. For example, in a case where the past data extraction unit 122 extracts past data for a predetermined period (hereinafter, M days) from N days before the date of the accident, it is necessary to acquire and process the past data for M days from N days before the date of the accident to (N - M + 1) days before the date of the accident into training data. In this case, data indicating "N" is set in the start offset 1151, and data indicating "N - M + 1" is set in the end offset 1152. As a result, the start date and time 1156 and the end date and time 1157 can be obtained in training data generation main processing S1412 described later. The values of the start offset 1151 and the end offset 1152 can be set by the user via a user interface.

In the MSG ID 1153, an MSG ID to be selected of trip data to be used for generation of training data in training data generation processing S1718 to be described later is set. The MSG ID 1153 may be set by the user via a user interface. The variable is used in S2012 of the training data generation processing S1718.

In the in-vehicle device ID 1154, an in-vehicle device ID of the in-vehicle device 20 (vehicle 2) that is a current processing target in various types of processing to be described later is set.

In the accident date and time 1155, an actual accident occurrence date and time or an accident occurrence date and time in a case where it is assumed that an accident has occurred is set for the vehicle 2 that is a current processing target.

The start date and time 1156 is a variable in which the start date and time of the past data obtained from the accident date and time 1155 and the start offset 1151 is set. The end date and time 1157 is a variable in which the end date and time of the past data obtained from the accident date and time 1155 and the end offset 1152 is set. The start date and time 1156 and the end date and time 1157 are used in trip period (pre-accident) determination processing S1716 to be described later.

Returning to FIG. 3, the accident risk diagnosis model 181 includes information (data) indicating an accident risk diagnosis model generated by machine learning.

The accident risk diagnosis result 182 includes information indicating a diagnosis result of the accident risk diagnosis model 181 (such as a numerical value indicating the level of the accident risk).

FIG. 10 illustrates an example of the training data table 116. As illustrated in the drawing, the training data table 116 includes a plurality of records including items such as the accident presence/absence 1161, the number of times of starting 1162, the number of times of backward movement 1163, the number of times of sudden braking 1164, the number of times of sudden acceleration 1165, the number of times of sudden steering 1166, and a travel distance 1167. One of the above records corresponds to one piece of training data.

The training data is data called learning data (teacher data, training set) used to construct an inference model in machine learning. The training data includes one label value and a plurality of features. In the case of the training data illustrated in the drawing, the label value is the content of the accident presence/absence 1161, and the feature is the content of the number of times of starting 1162, the number of times of backward movement 1163, the number of times of sudden braking 1164, the number of times of sudden acceleration 1165, the number of times of sudden steering 1166, and the travel distance 1167. Note that the feature may be other than the above. For example, the number of times the MSG ID has appeared during one trip, sensor values of the speed, acceleration, and jerk of the vehicle 2, the number of times these sensor values have exceeded a predetermined threshold value, and the like may be used as the feature. In short, any numerical value that can be generated from the travel data and represents the operation status of the vehicle 2 can be used as the feature.

In the above items, information indicating the accident presence/absence in a certain trip is set as the accident presence/absence 1161. The number of times of starting in the trip is set as the number of times of starting 1162. The number of times of backward movement in the trip is set as the number of times of backward movement 1163. The number of times of sudden braking in the trip is set as the number of times of sudden braking 1164. The number of times of sudden acceleration in the trip is set as the number of times of sudden acceleration 1165. The number of times of sudden steering in the trip is set as the number of times of sudden steering 1166. A travel distance in the trip is set as the travel distance 1167.

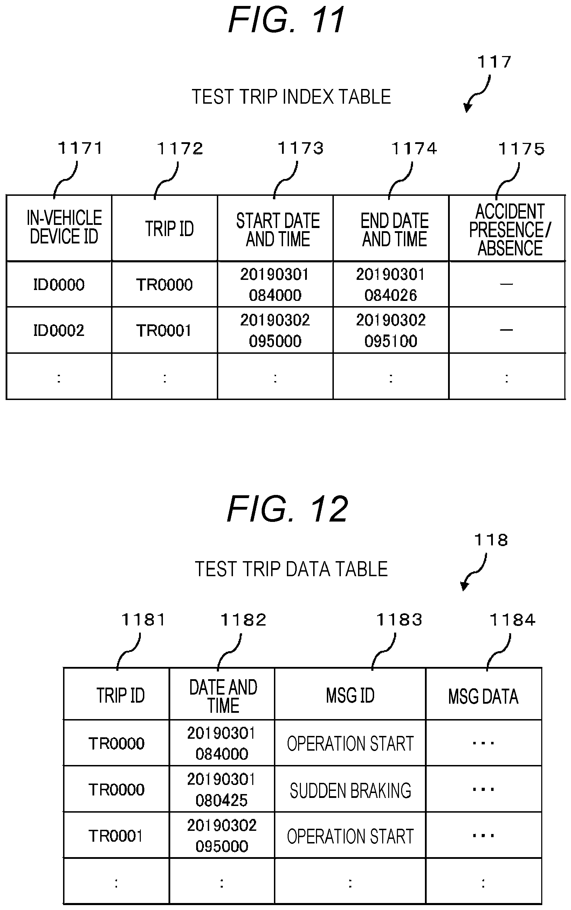

FIG. 11 illustrates an example of the test trip index table 117. As illustrated in the drawing, the test trip index table 117 includes a plurality of records including items of an in-vehicle device ID 1171, a trip ID 1172, a start date and time 1173, an end date and time 1174, and an accident presence/absence 1175. One of the above records corresponds to one piece of test trip index data. The contents of each item are similar to those of the trip index table 113 illustrated in FIG. 7, and thus the description thereof will be omitted. Note that the item of the accident presence/absence 1175 is formally provided to make an algorithm for generating test data and an algorithm for generating training data common.

FIG. 12 illustrates an example of the test trip data table 118. As illustrated in the drawing, the test trip data table 118 includes a plurality of records having items of a trip ID 1181, a date and time 1182, an MSG ID 1183, and MSG data 1184. One of the above records corresponds to one piece of test trip data. The contents of the respective items are similar to those of the trip data table 114 illustrated in FIG. 8, and thus the description thereof will be omitted.

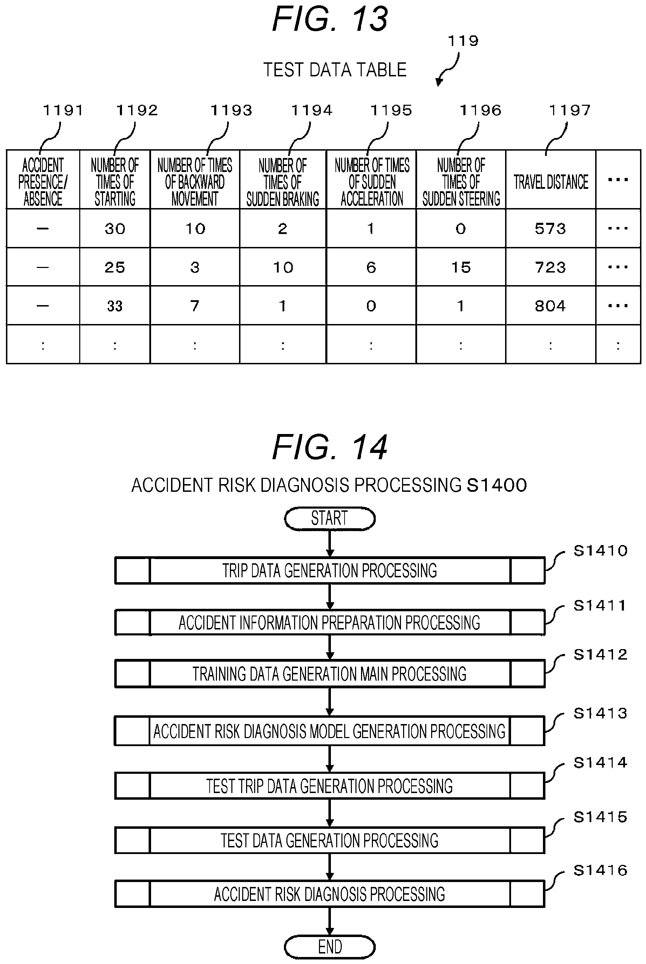

FIG. 13 illustrates an example of the test data table 119. As illustrated in the drawing, the test data table 119 includes a plurality of records including items such as an accident presence/absence 1191, the number of times of starting 1192, the number of times of backward movement 1193, the number of times of sudden braking 1194, the number of times of sudden acceleration 1195, the number of times of sudden steering 1196, and a travel distance 1197. One of the above records corresponds to one piece of test data. The contents of each item are similar to those of the training data table 116 illustrated in FIG. 10, and thus the description thereof will be omitted. Note that the item of the accident presence/absence 1191 is formally provided to make an algorithm for generating test data and an algorithm for generating training data common.

Note that the training data and the test data are in a relationship between the training data and the test data in the machine learning. That is, the diagnosis apparatus 10 generates the accident risk diagnosis model 181 using the training data, inputs the test data to the accident risk diagnosis model 181, and performs inference processing in machine learning to diagnose the accident risk of the driver of the vehicle 2.

Next, processing performed in the accident risk diagnosis system 1 will be described.

FIG. 14 is a flowchart illustrating processing (hereinafter, referred to as "accident risk diagnosis processing S1400") in which the diagnosis apparatus 10 generates an accident risk diagnosis model and diagnoses an accident risk using the generated accident risk diagnosis model. Hereinafter, the accident risk diagnosis processing S1400 will be described together with the drawing.

First, the training data generation unit 120 performs a process of generating trip data based on the travel data of the travel data table 111 (hereinafter, referred to as "trip data generation processing S1410").

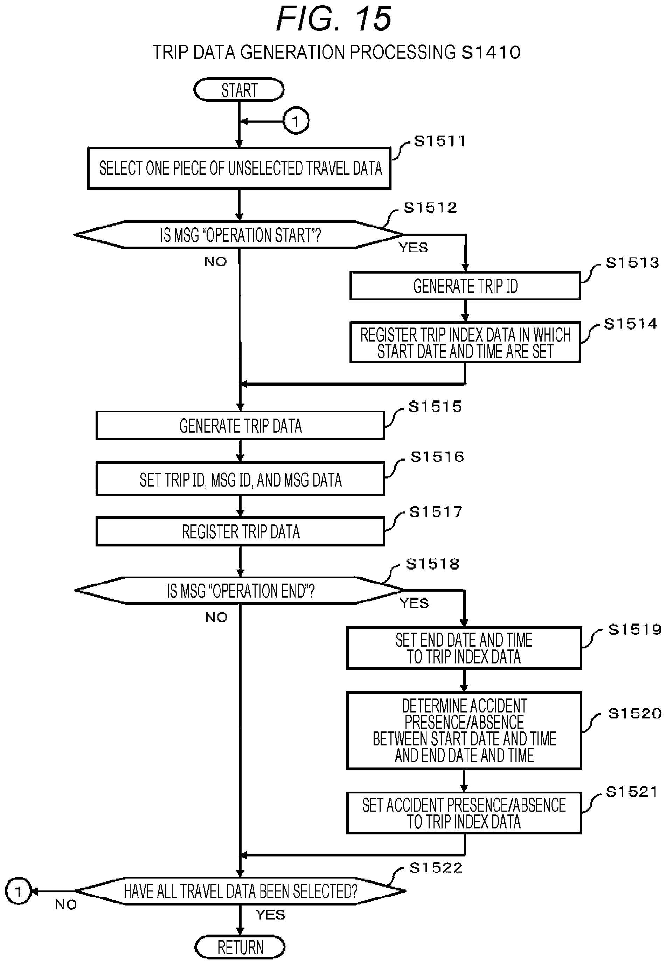

FIG. 15 is a flowchart for explaining the trip data generation processing S1410. Hereinafter, the trip data generation processing S1410 will be described together with the drawing.

First, the training data generation unit 120 selects one (one record) of unselected travel data among travel data to be used for generation of training data from the travel data table 111 (S1511).

Subsequently, the training data generation unit 120 determines whether "operation start" is set to the MSG ID 1113 of the travel data being selected (S1512). When "operation start" is set in the MSG ID 1113 (S1512: YES), the process proceeds to S1513. On the other hand, when "operation start" is not set in the MSG ID 1113 (S1512: NO), the process proceeds to S1515.

In S1513, the training data generation unit 120 newly generates a trip ID. Subsequently, the training data generation unit 120 generates trip index data in which the generated trip ID is set to the trip ID 1132 and the date and time 1112 of the travel data is set to the start date and time 1133, and registers the generated trip index data at the end of the trip index table 113 (S1514) Thereafter, the process proceeds to S1515.

In subsequent S1515 to S1517, the training data generation unit 120 generates trip data in which the trip ID generated in S1513, the MSG ID of the travel data being selected, and the MSG data of the travel data being selected are set, and registers the generated trip data at the end of the trip data table 114.

Subsequently, the training data generation unit 120 determines whether "operation end" is set in the MSG ID 1113 of the travel data being selected (S1518). When "operation end" is set in the MSG ID 1113 (S1518: YES), the process proceeds to S1519. When "operation end" is not set in the MSG ID 1113 (S1518: NO), the process proceeds to S1522.

In S1519, the training data generation unit 120 sets the contents of the date and time 1112 of the travel data being selected as the end date and time 1134 of the trip index data corresponding to the trip data registered in S1517.

Subsequently, the training data generation unit 120 compares the trip index data with the accident data table 112, determines the accident presence/absence in the period from the start date and time 1133 to the end date and time 1134 of the trip index data (S1520), and sets the result of the determination as the accident presence/absence 1135 of the trip index data (S1521). Thereafter, the process proceeds to S1522.

In S1522, the training data generation unit 120 determines whether all the travel data to be used for generating the training data of the travel data table 111 has been selected in S1511. If not all the pieces of travel data have been selected (S1522: NO), the process returns to S1511. If all the pieces of travel data have been selected (S1522: YES), the trip data generation processing S1410 ends.

Returning to FIG. 14, subsequently, the training data generation unit 120 performs a process (hereinafter, referred to as "accident information preparation processing S1411") of generating a provisional accident occurrence date and time for the accident data of the in-vehicle device 20 that has not caused an accident, and setting the generated accident occurrence date and time as the accident occurrence date and time 1123.

Note that the accident information preparation processing S1411 is preparation processing for generating training data of the training data table 116. The accident data in the accident data table 112 includes data in which "present" is set to the accident presence/absence 1122 and data in which "absent" is set to the accident presence/absence 1122. Among them, invalid contents are set in the accident occurrence date and time 1123 of the data in which "absent" is set in the accident presence/absence 1122. The accident information preparation processing S1411 sets the provisional accident occurrence date and time in the accident occurrence date and time 1123 of the data in which "absent" is set in the accident presence/absence 1122, so that training data generation main processing S1412 described later can process the accident occurrence date and time 1123 of the data in which "absent" is set in the accident presence/absence 1122 with the same algorithm as that of the data in which "present" is set in the accident presence/absence 1122.

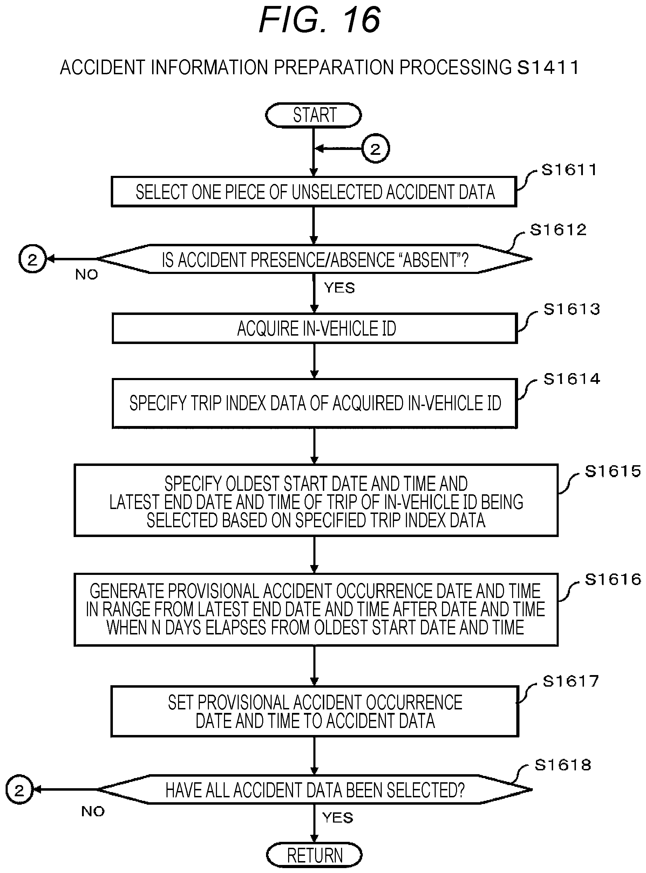

FIG. 16 is a flowchart illustrating the accident information preparation processing S1411. Hereinafter, the accident information preparation processing S1411 will be described together with the drawing.

First, the training data generation unit 120 selects one (one record) of unselected accident data from the accident data table 112 (S1611).

Subsequently, the training data generation unit 120 determines whether "absent" is set to the accident presence/absence 1122 of the accident data being selected (S1612). When "absent" is set to the accident presence/absence 1122 (S1612: YES), the process proceeds to S1613. When "absent" is not set to the accident presence/absence 1122 (S1612: NO), the process returns to S1611.

In S1613, the training data generation unit 120 acquires the contents of the in-vehicle device ID 1121 of the accident data being selected.

Subsequently, the training data generation unit 120 specifies, from the trip index table 113, all the trip index data in which the in-vehicle device ID acquired in S1613 is set to the in-vehicle device ID 1131 (S1614).

Subsequently, the training data generation unit 120 refers to the start date and time 1133 of all the trip index data specified in S1614 to specify the oldest start date and time (hereinafter, referred to as "oldest start date and time"), and refers to the end date and time 1134 of all the trip index data specified in S1614 to specify the latest end date and time (hereinafter, it is referred to as "latest end date and time") (S1615).

Subsequently, the training data generation unit 120 generates a provisional accident occurrence date and time in the range of the latest end date and time after the date and time when the number of days (hereinafter, N days) set in the start offset 1151 of the various parameters 115 elapses from the oldest start date and time (S1616). For example, the accident information preparation processing unit 124 sets a random date and time generated in the above range as a provisional accident occurrence date and time.

Subsequently, the training data generation unit 120 sets the generated provisional accident occurrence date and time as the accident occurrence date and time 1123 of the accident data being selected (S1617).

Subsequently, the training data generation unit 120 determines whether all the accident data in the accident data table 112 have been selected in S1611 (S1618). If not all the accident data have been selected (S1618: NO), the process returns to S1611. If all the accident data have been selected (S1618: YES), the accident information preparation processing S1411 ends.

Returning to FIG. 14, subsequently, the training data generation unit 120 performs a process of generating training data (hereinafter, referred to as "training data generation main processing S1412"). The training data generation unit 120 generates training data for all the in-vehicle devices 20 and registers the generated training data in the training data table 116.

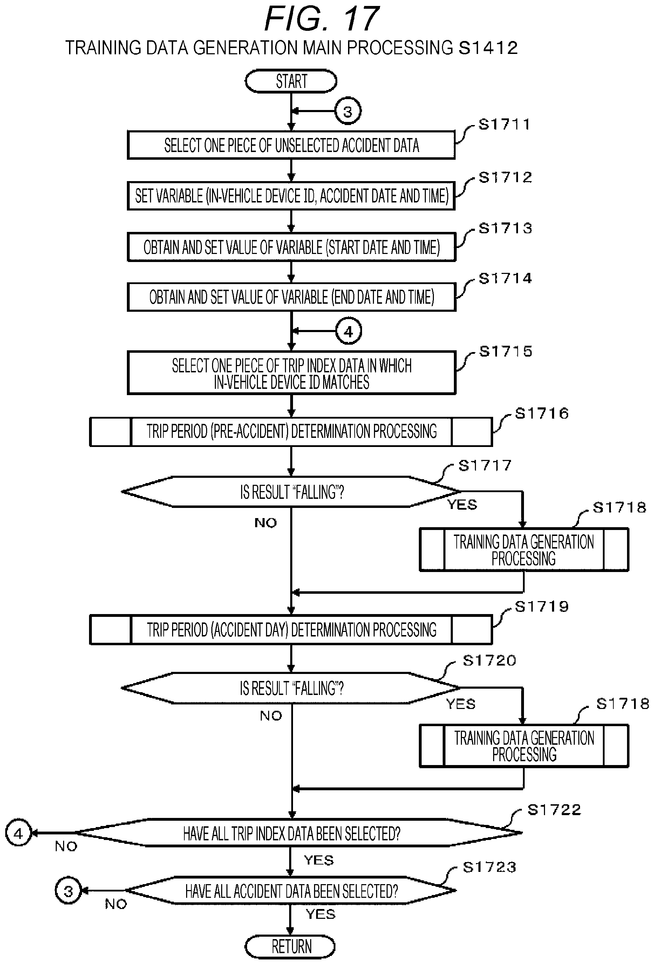

FIG. 17 is a flowchart illustrating the training data generation main processing S1412. Hereinafter, the training data generation main processing S1412 will be described together with the drawing. Note that it is assumed that the contents of the start offset 1151, the end offset 1152, and the MSG ID 1153 among the various parameters 115 in FIG. 9 have been set in advance by the user via a user interface or the like.

First, the training data generation unit 120 selects one piece of accident data (one record) from the accident data table 112 (S1711).

Subsequently, the training data generation unit 120 sets the contents of the in-vehicle device ID 1121 and the accident occurrence date and time 1123 of the accident data being selected to the in-vehicle device ID 1154 and the accident date and time 1155 of the various parameters 115, respectively (S1712).

Subsequently, the training data generation unit 120 sets the date and time obtained from the accident date and time 1155 and the start offset 1151 in FIG. 9 as the start date and time 1156 of the various parameters 115 (S1713). Specifically, if the start offset 1151 is N, the training data generation unit 120 sets the accident date and time 1155 - N as the start date and time 1156.

Subsequently, the training data generation unit 120 sets the date and time obtained from the accident date and time 1155 and the end offset 1152 in FIG. 9 as the end date and time 1157 in FIG. 9 (S1714). Specifically, if the end offset 1152 is N - M + 1, the training data generation unit 120 sets the accident date and time 1155 + N - M + 1 as the end date and time 1157. The above M is a value that designates how many days of information in the past are used for generation of training data. In the verification by the present inventors, favorable accuracy (diagnosis accuracy of an accident risk) was obtained when M was set to 10 days, but the value of M is not necessarily limited.

Subsequently, the training data generation unit 120 selects one trip index data in which the content of the in-vehicle device ID 1171 matches the content of the in-vehicle device ID 1154 of the various parameters 115 from the trip index table 113 (S1715).

Subsequently, the training data generation unit 120 performs a process (hereinafter, it is referred to as "trip period (pre-accident) determination processing S1716") of determining whether the trip period of the trip index data being selected falls within M days. Details of trip period (pre-accident) determination processing S1716 will be described later.

Subsequently, the training data generation unit 120 refers to the result of the trip period (pre-accident) determination processing S1716 (S1717). In a case where the above result is "falling" (S1717: YES), the training data generation unit 120 performs a process of generating training data (hereinafter, it is referred to as "training data generation processing S1718"). Note that details of the training data generation processing S1718 will be described later. On the other hand, in a case where the result is "not falling" (S1717: NO), the training data generation unit 120 performs the processing from S1719.

Subsequently, the training data generation unit 120 performs a process (hereinafter, referred to as "trip period (accident day) determination processing S1719") of determining whether the trip period of the trip index data being selected falls on the day on which the accident occurred (accident day). Details of trip period (accident day) determination processing S1719 will be described later.

Subsequently, the training data generation unit 120 refers to the result of the trip period (accident day) determination processing S1719 (S1720). In a case where the above result is "falling" (S1720: YES), the training data generation unit 120 performs a process of generating training data (hereinafter, referred to as "training data generation processing S1718"). On the other hand, in a case where the result is "not falling" (S1720: NO), the training data generation unit 120 performs the processing from S1722.

In S1722, the training data generation unit 120 determines whether all the trip index data of the trip index table 113 have been selected in S1716. If all the trip index data has not been selected (S1722: NO), the process returns to S1715. If all the trip index data has been selected (S1722: YES), the process proceeds to S1723.

In S1723, the training data generation unit 120 determines whether all the accident data in the accident data table 112 have been selected in S1711. If not all the accident data have been selected (S1723: NO), the process returns to S1711. If all the accident data has been selected (S1723: YES), the training data generation main processing S1412 ends, and the process proceeds to S1413 of FIG. 14.

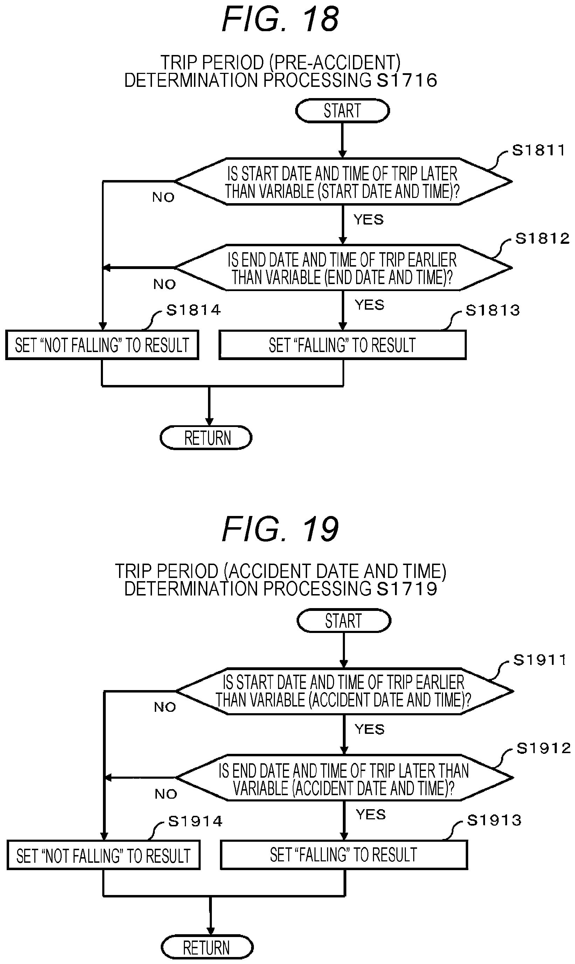

FIG. 18 is a flowchart for explaining the trip period (pre-accident) determination processing S1716 of the training data generation main processing S1412 of FIG. 17. Hereinafter, trip period (pre-accident) determination processing S1716 will be described together with the drawing.

The training data generation unit 120 determines whether the trip start date and time 1133 is later than the start date and time 1156 of the various parameters 115 (S1811). If the trip start date and time 1133 is later than the start date and time 1156 of the various parameters 115 (S1811: YES), the process proceeds to S1812. On the other hand, if the trip start date and time 1133 is not later than the start date and time 1156 of the various parameters 115 (S1811: NO), the process proceeds to S1814.

In S1812, the training data generation unit 120 determines whether the trip end date and time 1134 is earlier than the end date and time 1157 of the various parameters 115. If the trip end date and time 1134 is earlier than the end date and time 1157 (S1812: YES), the process proceeds to S1813. On the other hand, if the trip end date and time 1134 is not earlier than the end date and time 1157 (S1812: NO), the process proceeds to S1814.

In S1813, the training data generation unit 120 sets "falling" to the result of the processing (return value) and ends the processing. In S1814, the training data generation unit 120 sets "not falling" in the result (return value) of the processing and ends the processing.

FIG. 19 is a flowchart for explaining the trip period (accident day) determination processing S1719 of the training data generation main processing S1412 of FIG. 17. Hereinafter, the trip period (accident day) determination processing S1719 will be described together with the drawing.

The training data generation unit 120 determines whether the trip start date and time 1133 is earlier than the accident date and time 1155 of the various parameters 115 (S1911). If the trip start date and time 1133 is earlier than the accident date and time 1155 (S1911: YES), the process proceeds to S1912. On the other hand, if the trip start date and time 1133 is not earlier than the accident date and time 1155 (S1911: NO), the process proceeds to S1914.

In S1912, the training data generation unit 120 determines whether the trip end date and time 1134 is later than the accident date and time 1155 of the various parameters 115. If the trip end date and time 1134 is later than the accident date and time 1155 (S1912: YES), the process proceeds to S1913. On the other hand, if the trip end date and time 1134 is not later than the accident date and time 1155 (S1912: NO), the process proceeds to S1914.

In S1913, the training data generation unit 120 sets "falling" to the result of the processing (return value) and ends the processing. In S1914, the training data generation unit 120 sets "not falling" in the result (return value) of the processing and ends the processing.

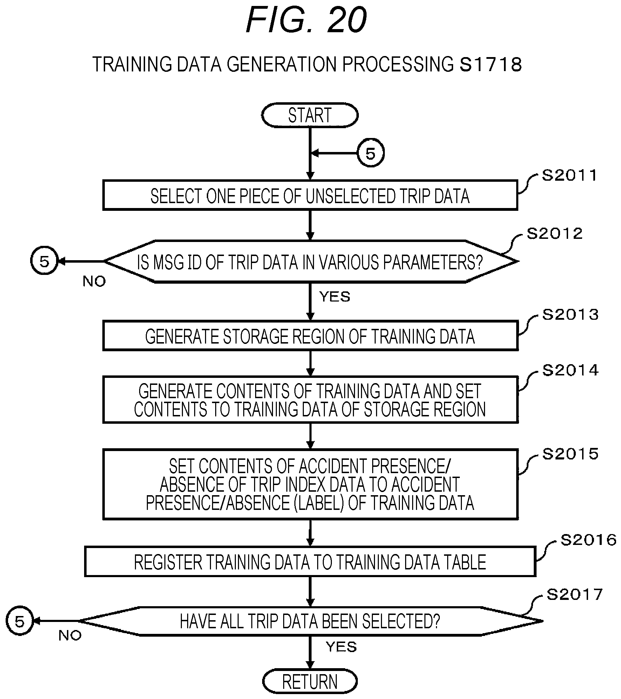

FIG. 20 is a flowchart for explaining the training data generation processing S1718 of the training data generation main processing S1412 illustrated in FIG. 17. Hereinafter, the training data generation processing S1718 will be described together with the drawing.

First, the training data generation unit 120 selects one unselected trip data in which the same trip ID as the trip ID 1132 of the trip index data currently being selected is set from the trip data table 114 (S2011).

Subsequently, the training data generation unit 120 determines whether the MSG ID 1143 of the trip data being selected exists in the list of MSG IDs 1153 of the various parameters 115 (S2012) . When the MSG ID 1143 of the trip data being selected is present in the MSG IDs 1153 of the various parameters 115 (S2012: YES), the process proceeds to S2013. When the MSG ID 1143 of the trip data being selected is not present in the MSG IDs 1153 of the various parameters 115 (S2012: NO), the process returns to S2011.

In S2013, the training data generation unit 120 generates (secures) the training data (storage region of the training data) in the main storage device 12.

Subsequently, the training data generation unit 120 generates contents of the training data based on the MSG ID 1143 and the MSG data 1144 of the trip data being selected, and sets the generated contents as the training data of the storage region (S2014). The contents of the training data are, for example, the number of times of starting 1162, the number of times of backward movement 1163, the number of times of sudden braking 1164, the number of times of sudden acceleration 1165, the number of times of sudden steering 1166, the travel distance 1167, and the like exemplified above. The training data generation unit 120 generates the above contents on the basis of, for example, the number of counts obtained by counting how many times the same MSG ID 1143 has appeared, the total value or average value of the values of the MSG data 1144, the travel distance obtained from the position information of the start point and the end point of the trip, and the like.

Subsequently, the training data generation unit 120 sets the contents of the accident presence/absence 1135 in the trip index data currently being selected to the accident presence/absence 1161 (label) in the training data (S2015).

Subsequently, the training data generation unit 120 registers the training data of the storage region in the training data table 116 (S2016).

Subsequently, in S2011, the training data generation unit 120 determines whether all the trip data having the same trip ID as the trip ID 1132 of the trip index data being selected has been selected from the trip data table 114 (S2017). If all the trip data has not been selected (S2017: NO), the process returns to S2011. If all the trip data has been selected (S2017: YES), the training data generation processing S1718 ends.

Returning to FIG. 14, subsequently, the accident risk diagnosis model generation unit 130 performs a process of generating an accident risk diagnosis model (hereinafter, referred to as "accident risk diagnosis model generation processing S1413").

The accident risk diagnosis model generation processing S1413 is processing of generating a machine learning model by supervised machine learning using the training data of the training data table 116. More specifically, the processing is machine learning processing in which the accident presence/absence 1161 in the training data table 116 of FIG. 10 is a label value, and the number of times of starting 1162, the number of times of backward movement 1163, the number of times of sudden braking 1164, the number of times of sudden acceleration 1165, the number of times of sudden steering 1166, and the travel distance 1167 in the training data table 116 are features. The machine learning may be either machine learning in class classification or machine learning in a regression task. Types of machine learning that can be used include, for example, k-nearest neighbor algorithm, k-nearest neighbor regression, linear model, naive Bayesian classification, decision tree, decision tree ensemble method (random forest, gradient boosting regression tree), support vector machine, and neural network (deep learning).

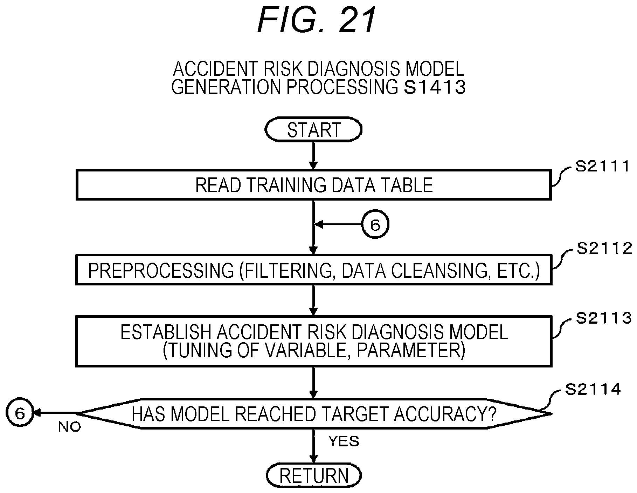

FIG. 21 is a flowchart for explaining the accident risk diagnosis model generation processing S1413. Hereinafter, the accident risk diagnosis model generation processing S1413 will be described together with FIG. 21.

First, the accident risk diagnosis model generation unit 130 reads the training data table 116 (S2111).

Subsequently, the accident risk diagnosis model generation unit 130 performs preprocessing (filtering, feature adjustment (increase/decrease, normalization, clipping, and the like of numerical values), data cleansing, character code integration, etc.) on a predetermined number of pieces of training data in the read training data table 116 (S2112).

Subsequently, the accident risk diagnosis model generation unit 130 generates the accident risk diagnosis model 181 which is a machine learning model using the preprocessed training data (S2113). The accident risk diagnosis model generation unit 130 generates the accident risk diagnosis model 181 while appropriately adjusting functions and parameters.

Subsequently, the accident risk diagnosis model generation unit 130 verifies whether the diagnosis accuracy of the accident risk by the generated accident risk diagnosis model 181 has reached the target accuracy. The accident risk diagnosis model generation unit 130 performs the above verification using, for example, training data not used in S2113 of the training data table 116 (S2114). When the diagnosis accuracy has not reached the target accuracy (S2114: NO), the process returns to S2111, and the processing of S2112 to S2113 is performed again using another training data that has not been subjected to the preprocessing. On the other hand, when the diagnosis accuracy has reached the target accuracy (S2114: YES), the accident risk diagnosis model generation processing S1413 ends.

Returning to FIG. 14, subsequently, the test data generation unit 140 performs a process of generating test trip index data and test trip data used for generating test data (hereinafter, referred to as "test trip data generation processing S1414").

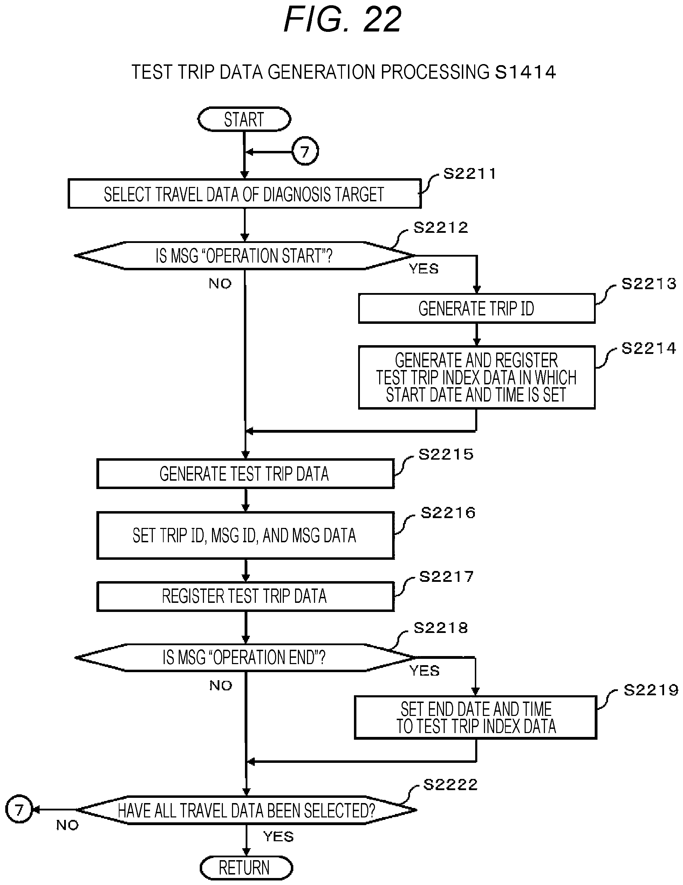

FIG. 22 is a flowchart for explaining the test trip data generation processing S1414. Hereinafter, the test trip data generation processing S1414 will be described together with the drawing.

First, the test data generation unit 140 selects travel data to be diagnosed (travel data of the vehicle 2 driven by the driver to be diagnosed for the accident risk) from the travel data table 111 (S2211).

Subsequently, the test data generation unit 140 determines whether "operation start" is set in the MSG ID 1113 of the travel data to be diagnosed (S2212). When "operation start" is set in the MSG ID 1113 (S2212: YES), the process proceeds to S2213. On the other hand, when "operation start" is not set in the MSG ID 1113 (S2212: NO), the process proceeds to S2215.

In S2213, the test data generation unit 140 newly generates a trip ID. Subsequently, the test data generation unit 140 sets the generated trip ID to the trip ID 1172, generates test trip index data in which the content of the date and time 1112 of the travel data is set to the start date and time 1173, and registers the test trip index data in the test trip index table 117 (S2214). Thereafter, the process proceeds to S2215.

In S2215 to S2217, the test data generation unit 140 generates test trip data in which the trip ID generated in S2213, the MSG ID of the travel data to be diagnosed, and the MSG data of the travel data to be diagnosed are set, and registers the generated test trip data at the end of the test trip data table 118.

Subsequently, the test data generation unit 140 determines whether "operation end" is set in the MSG ID 1113 of the travel data to be diagnosed (S2218). When "operation end" is set in the MSG ID 1113 (S2218: YES), the process proceeds to S2219. On the other hand, when "operation end" is not set in the MSG ID 1113 (S2218: NO), the process proceeds to S2222.

In S2219, the test data generation unit 140 sets the contents of the date and time 1112 of the travel data to be diagnosed as the end date and time 1174 of the test trip index data corresponding to the test trip data registered in S2217.

In S2222, the test data generation unit 140 determines whether all the travel data to be diagnosed have been selected from the travel data table 111 in S2211. If not all the pieces of travel data have been selected (S2222: NO), the process returns to S2211. If all the pieces of travel data have been selected (S2222: YES), the test trip data generation processing S1414 ends.

Returning to FIG. 14, subsequently, the test data generation unit 140 performs a process of generating test data (hereinafter, referred to as "test data generation processing S1415").

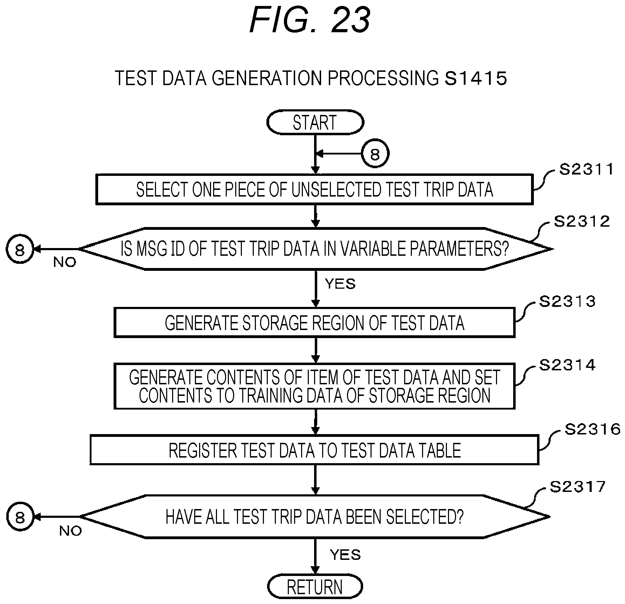

FIG. 23 is a flowchart illustrating the test data generation processing S1415. Hereinafter, the test data generation processing S1415 will be described together with the drawing.

First, the test data generation unit 140 selects one unselected test trip data from the test trip data table 118 (S2311).

Subsequently, the test data generation unit 140 determines whether the MSG ID 1183 of the test trip data being selected is present in the list of the MSG IDs 1153 of the various parameters 115 (S2312). When the MSG ID 1183 of the test trip data being selected is present in the list of MSG IDs 1153 of the various parameters 115 (S2312: YES), the process proceeds to S2313. When the MSG ID 1143 of the test trip data being selected is not present in the list of MSG IDs 1153 of the various parameters 115 (S2312: NO), the process returns to S2311.

In S2313, the test data generation unit 140 generates (secures) the test data (storage region of the test data).

Subsequently, the test data generation unit 140 generates the contents of the test data based on the MSG ID 1183 and the MSG data 1184 of the test trip data being selected, and sets the contents in the generated test data in the storage region (S2314). Each item of the test data corresponds to each item of the training data, and is the number of times of starting 1192, the number of times of backward movement 1193, the number of times of sudden braking 1194, the number of times of sudden acceleration 1195, the number of times of sudden steering 1196, the travel distance 1197, and the like exemplified above.

Subsequently, the test data generation unit 140 registers the test data in the storage region in the test data table 119 (S2316).

Subsequently, in S2311, the test data generation unit 140 determines whether all the test trip data to be diagnosed have been selected from the test trip data table 118 (S2317) . If not all the test trip data to be diagnosed have been selected (S2317: NO), the process returns to S2311. If all the test trip data to be diagnosed have been selected (S2317: YES), the test data generation processing S1415 ends.

Returning to FIG. 14, subsequently, the accident risk diagnosis unit 150 performs a process (hereinafter, referred to as "accident risk diagnosis processing S1416") of diagnosing the accident risk of the diagnosis target vehicle 2 (diagnosis target person) using the accident risk diagnosis model 181.

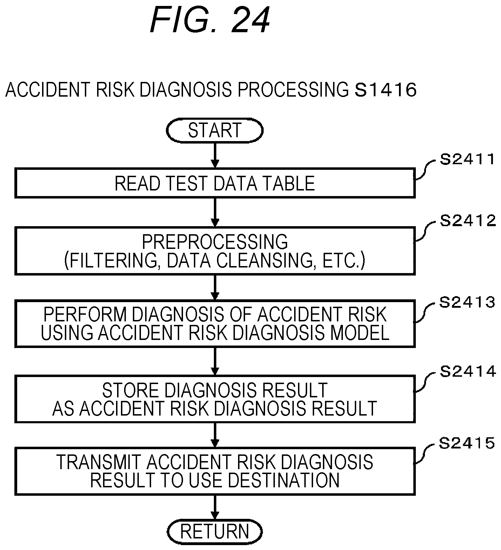

FIG. 24 is a flowchart for explaining the accident risk diagnosis processing S1416. Hereinafter, the accident risk diagnosis processing S1416 will be described together with the drawing.

First, the accident risk diagnosis unit 150 reads the test data table 119 (S2411).

Subsequently, the accident risk diagnosis unit 150 performs preprocessing (filtering, feature adjustment (Increase/decrease, normalization, clipping, and the like of numerical values), data cleansing, character code integration, etc.) for machine learning on the test data in the test data table 119 (S2412).

Subsequently, the accident risk diagnosis unit 150 inputs the preprocessed test data to the accident risk diagnosis model 181 to diagnose the accident risk (S2413).

Subsequently, the accident risk diagnosis unit 150 stores an accident risk diagnosis result as an accident risk diagnosis result 182 (S2414). The accident risk diagnosis result 182 is, for example, information indicating the accident presence/absence risk (for example, numerical values such as "1" indicating that there is an accident risk and "0" indicating that there is no accident risk), a numerical value indicating the occurrence probability of an accident, and the like. By using the accident risk diagnosis result 182, for example, it is possible to diagnose an accident risk and predict the occurrence of an accident on the basis of long-term and absolute evaluation.

Subsequently, the input/output control unit 265 transmits the accident risk diagnosis result 182 to a use destination (for example, the in-vehicle device 20 of the vehicle 2 that has transmitted the travel data to be diagnosed) of the information (S2415). Upon receiving the accident risk diagnosis result 182 from the diagnosis apparatus 10, the usage destination outputs, for example, information based on the received accident risk diagnosis result 182.

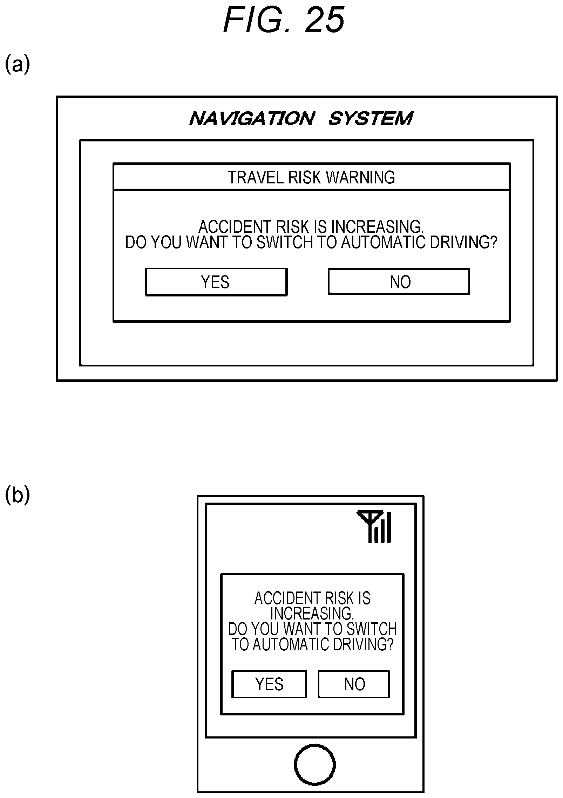

FIG. 25(a) illustrates an example in which the in-vehicle device 20 such as a car navigation system displays the above information. FIG. 25(b) illustrates an example in which a mobile information terminal carried by the user such as a smartphone displays the information. In these examples, since the received accident risk diagnosis result 182 includes contents indicating an increase in accident risk, the in-vehicle device 20 displays, on the display, information (text data, image data, and the like) prompting the user (driver) to switch from manual driving to automatic driving. Note that, although the figure illustrates a case where information is visually displayed, the information may be output by another method of stimulating five human senses such as voice and vibration.

As described above in detail, in the accident risk diagnosis system 1 of the present embodiment, the diagnosis apparatus 10 generates the accident risk diagnosis model based on the travel data collected from the plurality of vehicles 2 (the travel data in the predetermined period before the accident day and the travel data on the accident day), and diagnoses the accident risk of the driver by the generated accident risk diagnosis model. Therefore, it is possible to accurately estimate the accident risk on a common scale while considering not only the accident risk in a specific place but also various driving situations of the driver.

### [Second Embodiment]

In the accident risk diagnosis system 1 of the first embodiment, the diagnosis apparatus 10 performs the processes such as generation of training data, generation of the accident risk diagnosis model 181, and diagnosis of an accident risk using travel data transmitted from the vehicle 2 (in-vehicle device 20), and the accident risk diagnosis system 1 of the second embodiment performs these processes on the vehicle 2 (in-vehicle device 20) side. Hereinafter, differences from the accident risk diagnosis system 1 of the first embodiment will be mainly described.

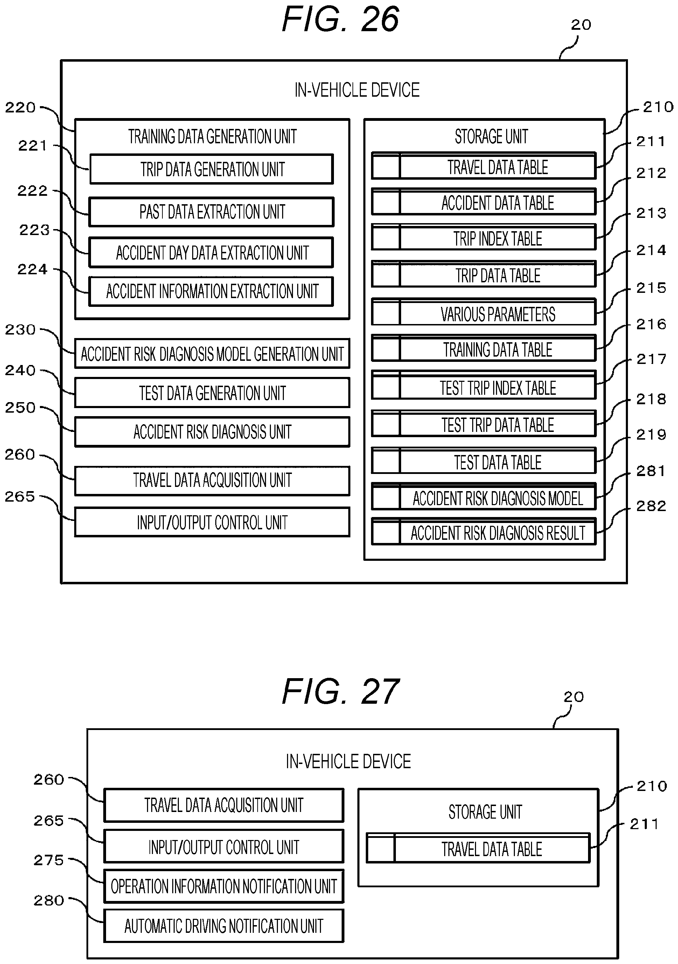

FIG. 26 is a diagram illustrating main functions of the in-vehicle device 20 of the accident risk diagnosis system 1 according to the second embodiment. As illustrated in the drawing, the in-vehicle device 20 includes a storage unit 210, a training data generation unit 220, an accident risk diagnosis model generation unit 230, a test data generation unit 240, an accident risk diagnosis unit 250, a travel data acquisition unit 260, and an input/output control unit 265.

The storage unit 210 stores a travel data table 211, an accident data table 212, a trip index table 213, a trip data table 214, various parameters 215, a training data table 216, a test trip index table 217, a test trip data table 218, a test data table 219, an accident risk diagnosis model 281, and an accident risk diagnosis result 282. Since these pieces of information are similar to the information having the same name stored in the storage unit 110 of the first embodiment, the description thereof will be omitted.

Among the above functions, the functions of the training data generation unit 220, the accident risk diagnosis model generation unit 230, the test data generation unit 240, the accident risk diagnosis unit 250, and the travel data acquisition unit 260 are the same as the functions of the same names in the first embodiment, and thus the description thereof will be omitted.

The input/output control unit 265 receives the contents of the travel data tables 111 of the plurality of vehicles 2 from the diagnosis apparatus 10 and registers the contents in the travel data table 211. In addition, the input/output control unit 265 acquires accident data from a predetermined information source, and registers the acquired accident data in the accident data table 212.

The in-vehicle device 20 according to the second embodiment executes processing similar to the accident risk diagnosis processing S1400 according to the first embodiment to generate training data, generate the accident risk diagnosis model 181, diagnose an accident risk, and the like, and output a diagnosis result of the accident risk.

As described above, the processing performed by the diagnosis apparatus 10 in the first embodiment can also be performed on the in-vehicle device 20 side. Note that the diagnosis apparatus 10 in the accident risk diagnosis system 1 of the second embodiment only needs to have a function of providing the in-vehicle device 20 with travel data acquired from at least the plurality of vehicles 2 (in-vehicle devices 20). In addition, the diagnosis apparatus 10 may be caused to function as the above-described information source, and accident data may be provided from the diagnosis apparatus 10 to the in-vehicle device 20 via the communication network 5. In addition, all or part of the travel data and the accident data may be shared by communicating between the in-vehicle devices 20 of the respective vehicles 2 via the communication network 5. In this case, the accident risk diagnosis system 1 may not necessarily be provided with the diagnosis apparatus 10.

### [Third Embodiment]

In the accident risk diagnosis system 1 of the third embodiment, the diagnosis apparatus 10 diagnoses the accident risk and notifies the diagnosis result according to the activation/termination of the vehicle 2. Hereinafter, differences from the accident risk diagnosis system 1 of the first embodiment will be mainly described.

In the following description, it is assumed that the vehicle 2 according to the third embodiment can travel by selecting one of a manual travel mode and an automatic driving travel mode in which autonomous travel is performed using a technique such as artificial intelligence (AI). In the following description, activation means bringing the vehicle 2 into a state where a person can drive the vehicle 2. For example, activation in the vehicle 2 including an ignition device and a power switch means turning on the ignition device and the power switch. In the following description, the term "termination" refers to bringing the vehicle 2 into a state where a person cannot drive the vehicle 2. For example, the term "termination" in the vehicle 2 including the ignition device and the power switch refers to turning off the ignition device and the power switch.

FIG. 27 is a diagram illustrating main functions of the in-vehicle device 20 according to the third embodiment. As illustrated in the drawing, the in-vehicle device 20 of the third embodiment includes functions of a storage unit 210, a travel data acquisition unit 260, an input/output control unit 265, an operation information notification unit 275, and an automatic driving control unit 280. Among the above functions, functions other than the operation information notification unit 275 and the automatic driving control unit 280 are similar to those of the in-vehicle device 20 of the first embodiment.

When the driver of the vehicle 2 operates the vehicle 2, the operation information notification unit 275 notifies the diagnosis apparatus 10 of information indicating the content of the operation through the communication network 5. For example, when the driver of the vehicle 2 performs an operation of starting the vehicle 2, the operation information notification unit 275 notifies the diagnosis apparatus 10 of information indicating the fact (hereinafter, the activation information is referred to as "activation information"). In addition, for example, when the driver of the vehicle 2 performs an operation of ending the vehicle 2, information (hereinafter, it is referred to as "termination information") indicating the operation is notified to the diagnosis apparatus 10.

The automatic driving control unit 280 performs switching control of enabling or disabling the automatic driving function of the vehicle 2 according to the diagnosis result of the accident risk sent from the diagnosis apparatus 10.

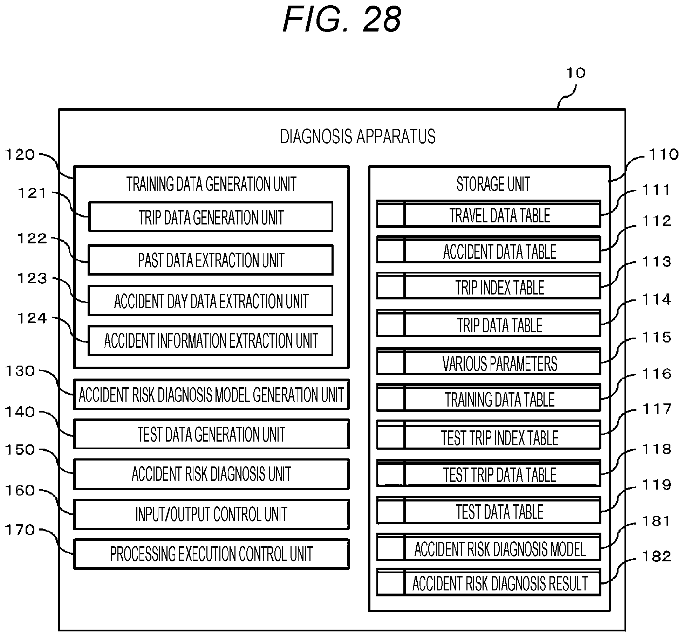

FIG. 28 is a diagram illustrating main functions of the diagnosis apparatus 10 according to the third embodiment. As illustrated in the drawing, the diagnosis apparatus 10 of the third embodiment includes functions of a storage unit 110, a training data generation unit 120, an accident risk diagnosis model generation unit 130, a test data generation unit 140, an accident risk diagnosis unit 150, an input/output control unit 160, and a processing execution control unit 170. Among the above functions, functions other than the processing execution control unit 170 are similar to those of the diagnosis apparatus 10 of the first embodiment.

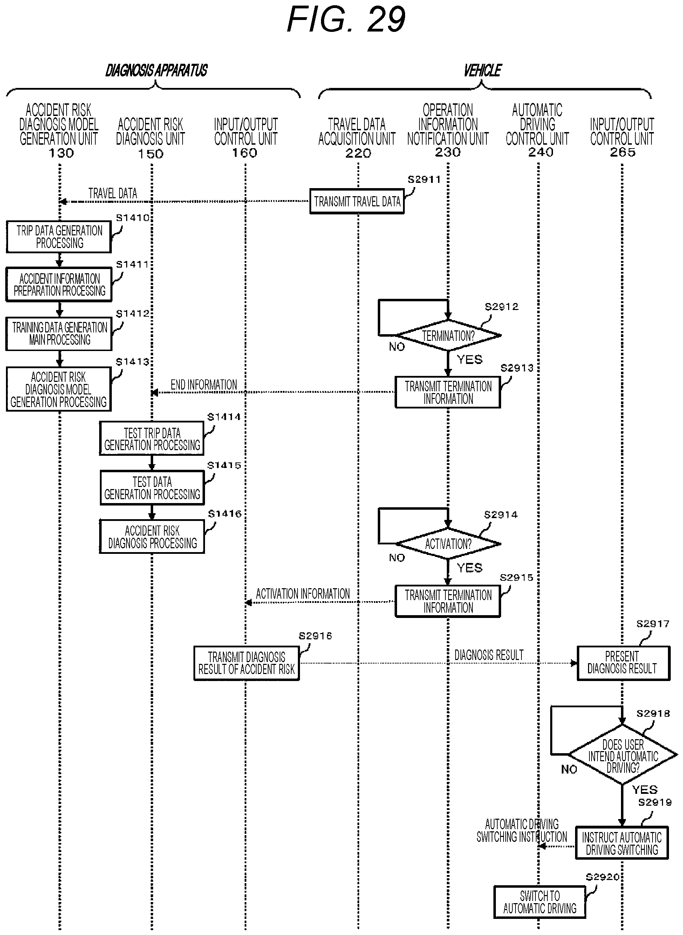

FIG. 29 is a sequence diagram for explaining processing performed in the accident risk diagnosis system 1 of the third embodiment. Hereinafter, a description will be given together with the drawing.

When the vehicle 2 is activated, the diagnosis apparatus 10 generates trip data using travel data transmitted from the in-vehicle device 20 (S2911, S1410). In addition, the diagnosis apparatus 10 performs accident information preparation processing S1411, training data generation main processing S1412, and accident risk diagnosis model generation processing S1413 to generate the accident risk diagnosis model 181 (S1413).

Upon receiving the termination information from the in-vehicle device 20 (S2912, S2913), the processing execution control unit 170 performs test trip data generation processing S1414 and test data generation processing S1415 to generate test data, and performs accident risk diagnosis processing S1416 using the generated test data to generate the accident risk diagnosis result 182.

As described above, the diagnosis apparatus 10 of the third embodiment performs the accident risk diagnosis processing S1416 to generate the diagnosis result when the driver performs the termination operation, so that the diagnosis result can be immediately provided to the user such as the driver when the vehicle 2 is activated next time.

Thereafter, when receiving the activation information from the in-vehicle device 20 (S2914 to S2915), the diagnosis apparatus 10 transmits the diagnosis result of the accident risk (diagnosis result by the latest accident risk diagnosis model 181) to the in-vehicle device 20 (S2916).

The input/output control unit 265 of the in-vehicle device 20 presents information based on the accident risk diagnosis result sent from the diagnosis apparatus 10 to the user (S2917). At this time, the input/output control unit 265 determines whether the accident risk of the driver is high on the basis of the diagnosis result (for example, whether a numerical value indicating the accident risk exceeds a preset threshold value). When it is determined that the accident risk is high (for example, the numerical value exceeds the threshold), the input/output control unit 265 outputs information prompting the driver to switch to the automatic driving (S2918). When the driver expresses an intention (input operation or the like) to switch to the automatic driving (S2918: YES), the automatic driving control unit 280 instructs the automatic driving control unit 280 to switch the traveling mode of the host vehicle to the automatic driving (S2919), and the automatic driving control unit 280 switches the traveling mode of the vehicle 2 to the traveling mode by the automatic driving in response to the instruction (S2920).

As described above, in the accident risk diagnosis system 1 of the third embodiment, the generation of the accident risk diagnosis model 181 and the diagnosis result of the accident risk can be provided to the user according to the start operation and the end operation of the vehicle 2, and the diagnosis result can be quickly provided to the user at an appropriate timing. In addition, in a case where the accident risk is high, the user is urged to switch to automatic driving, so that it is possible to reduce the accident risk.

Although an embodiment of the present invention has been described in detail above, the present invention is not limited to the above embodiment, and it goes without saying that various modifications can be made without departing from the gist of the present invention. For example, the above embodiments of the invention have been described in detail in a clearly understandable way, and are not necessarily limited to those having all the described configurations. In addition, some of the configurations of the above embodiments may be omitted, replaced with other configurations, and added to other configurations.

Each of the above configurations, functional units, processing units, processing means, and the like may be partially or entirely achieved by hardware by, for example, designing by an integrated circuit. In addition, the configurations and the functions may be realized in software such that a processor analyzes and performs a program which realizes each function. Information such as a program, a table, and a file for achieving each function can be stored in a recording device such as a memory, a hard disk, or a solid-state drive (SSD), or a recording medium such as an integrated circuit (IC) card, a secure digital (SD) card, or a digital versatile disc (DVD).

Further, in the drawings above, only control lines and information lines considered to be necessary for explanation are illustrated, but not all the control lines and the information lines for mounting are illustrated. For example, in practice, almost all the configurations may be considered to be connected to each other.

In addition, the arrangement forms of the various functional units, the various processing units, and the various databases of each information processing device described above are merely examples. The arrangement form of the various functional units, the various processing units, and the various databases can be changed to an optimal arrangement form from the viewpoint of performance, processing efficiency, communication efficiency, and the like of hardware and software included in these devices.

In addition, the configuration (schema or the like) of the database that stores various data described above can be flexibly changed from the viewpoints of efficient use of resources, improvement in processing efficiency, improvement in access efficiency, improvement in search efficiency, and the like.

### Reference Signs List

- 1: accident risk diagnosis system
- 2: vehicle
- 5: communication network
- 10: diagnosis apparatus
- 20: in-vehicle device
- 110: storage unit
- 111: travel data table
- 112: accident data table
- 113: trip index table
- 114: trip data table
- 115: various parameters
- 116: training data table
- 117: test trip index table
- 118: test trip data table
- 119: test data table
- 170: processing execution control unit
- 181: accident risk diagnosis model
- 182: accident risk diagnosis result
- 210: storage unit
- 211: travel data table
- 275: operation information notification unit
- 280: automatic driving control unit
- 260: travel data acquisition unit
- 265: input/output control unit
- S1400: accident risk diagnosis processing
- S1410: trip data generation processing
- S1412: training data generation main processing
- S1413: accident risk diagnosis model generation processing
- S1414: test trip data generation processing
- S1415: test data generation processing
- S1416: accident risk diagnosis processing

## Claims

1. An accident risk diagnosis method executed by an information processing device, comprising:
storing travel data that is data indicating a travel state for each date and time of each of a plurality of vehicles, and information about past accidents of the plurality of vehicles;
extracting, from the travel data, the travel data for a predetermined period before an accident day and the travel data on the accident day, and generating training data for each trip, which is a period from activation to termination of the vehicle, based on an extracted travel data;
generating an accident risk diagnosis model which is a machine learning model for diagnosing an accident risk using the training data; and
diagnosing an accident risk of the vehicle by inputting a feature in the trip of the vehicle to be diagnosed of the accident risk to the accident risk diagnosis model.

2. The accident risk diagnosis method executed by the information processing device according to claim 1, further comprising:
transmitting a result of the diagnosis to an in-vehicle device mounted on the vehicle.

3. The accident risk diagnosis method according to claim 1 or 2, wherein
the training data is data in which information indicating an accident presence/absence of the vehicle on the trip is used as a label, and at least one of information regarding the number of times of starting of the vehicle, information regarding the number of times of backward movement of the vehicle, information regarding the number of times of sudden braking of the vehicle, information regarding the number of times of sudden acceleration of the vehicle, information regarding the number of times of sudden steering of the vehicle, and information regarding a travel distance of the vehicle on the trip is set as a feature.

4. The accident risk diagnosis method executed by the information processing device according to claim 1 or 2, further comprising:
setting the predetermined period on the basis of information received from a user via a user interface.

5. The accident risk diagnosis method executed by the information processing device according to claim 1 or 2, comprising:
generating trip index data that is data associating information indicating a period of the trip of each of the vehicles with information indicating accident presence/absence in the trip;
generating trip data that is data indicating a driving situation of the vehicle in the trip; and
generating the training data based on the trip index data and the trip data.

6. The accident risk diagnosis method executed by the information processing device according to claim 1 or 2, further comprising:
communicably connecting the information processing device to an in-vehicle device provided in each of the vehicles and acquiring the travel data from the in-vehicle device.

7. The accident risk diagnosis method according to claim 6, wherein
the in-vehicle device is at least one of an electronic control unit (ECU), a telematic control unit (TCU), an in-vehicle infotainment system (IVI), a smartphone, a feature phone, a tablet terminal, a head mounted display, an audio input device, a braille input device, or a vibration detection device.

8. The accident risk diagnosis method executed by the information processing device according to claim 1, comprising:
causing the accident risk diagnosis model to learn during a period in which the vehicle is activated.

9. The accident risk diagnosis method executed by the information processing device according to claim 8, comprising:
when receiving information indicating that the activation of the vehicle has ended, diagnosing the accident risk and transmitting a result of the diagnosis to the vehicle.

10. The accident risk diagnosis method according to claim 9, wherein
when receiving a result of the diagnosis, the vehicle presents information based on the result of the diagnosis to a user, receives an intention display of whether to switch the vehicle to automatic driving from the user via a user interface, and switches a traveling mode of the vehicle to a traveling mode by automatic driving when receiving an intention display of switching the vehicle to automatic driving from the user.

11. The accident risk diagnosis method according to claim 1 or 2, wherein
the predetermined period is 10 days.

12. The accident risk diagnosis method according to claim 1, wherein
the information processing device is provided in the vehicle.

13. An accident risk diagnosis apparatus, comprising:
a storage unit that stores travel data that is configured by using an information processing device and data indicating a travel state for each date and time of each of a plurality of vehicles, and information about past accidents of the plurality of vehicles;
a training data generation unit that extracts, from the travel data, the travel data for a predetermined period before an accident day and the travel data in the accident day, and generates training data for each trip, which is a period from activation to termination of the vehicle, based on the extracted travel data;
an accident risk diagnosis model generation unit that generates an accident risk diagnosis model that is a machine learning model for diagnosing an accident risk using the training data; and
an accident risk diagnosis unit that diagnoses an accident risk of the vehicle by inputting a feature in the trip of the vehicle to be diagnosed with the accident risk to the accident risk diagnosis model.

14. The accident risk diagnosis apparatus according to claim 13, further comprising:
an input/output control unit configured to transmit a result of the diagnosis to an in-vehicle device mounted on the vehicle.

15. An accident risk diagnosis system, comprising:
an accident risk diagnosis apparatus including:
a storage unit that is configured by using an information processing device, and stores travel data that is data indicating a travel state for each date and time of each of a plurality of vehicles and information about past accidents of the plurality of vehicles;
a training data generation unit that extracts, from the travel data, the travel data for a predetermined period before an accident day and the travel data for the accident day, and generates training data for each trip, which is a period from activation to termination of the vehicle, based on an extracted travel data;
an accident risk diagnosis model generation unit that generates an accident risk diagnosis model that is a machine learning model for diagnosing an accident risk using the training data; and
an accident risk diagnosis unit that diagnoses an accident risk of the vehicle by inputting a feature in the trip of the vehicle to be diagnosed with the accident risk to the accident risk diagnosis model; and
an in-vehicle device that is provided in each of the vehicles, is communicably connected to the accident risk diagnosis apparatus, and transmits the travel data to the accident risk diagnosis apparatus.
